# EUROPÄISCHE PATENTSCHRIFT

(11) **EP 2 439 105 B1**
(45) Veröffentlichungstag und Bekanntmachung des Hinweises auf die Patenterteilung: **17.08.2016**
(21) Anmeldenummer: 11181827.4
(22) Anmeldetag: 19.09.2011
(51) Int. Cl.: B60Q 3/02, B64D 11/00

(54) **Beleuchtungsvorrichtung, insbesondere Leselampe**
Lighting device, in particular reading lamp
Dispositif d'éclairage, notamment lampe de lecture

(30) Priorität: 11.10.2010 DE 102010042287; 11.10.2010 US 391707 P
(43) Veröffentlichungstag der Anmeldung: 11.04.2012
(73) Patentinhaber: Schott AG, 55122 Mainz (DE)
(72) Erfinder: Schultheis, Bernd, 55270 Schwabenheim (DE); Weil, Achim, 67308 Immesheim (DE); Dietrich, Andreas, 55452 Guldental (DE); Vogel, Dirk, 55432 Damscheid (DE)
(74) Vertreter: Mehler Achler

(56) Entgegenhaltungen:
- WO-A1-2008/055694
- DE-A1- 19 926 561
- US-A1- 2010 091 503

## Beschreibung

Die vorliegende Erfindung betrifft eine Beleuchtungsvorrichtung, insbesondere eine Leseleuchte. Derartige Beleuchtungsvorrichtungen werden als Leseleuchte insbesondere dort eingesetzt, wo sich die Lichtverhältnisse zeitlich häufig ändern und die Ausleuchtung eines bestimmten Sektors individuell anpassbar sein soll. Typische Anwendungsbereiche sind Flugzeuge und Züge, bei denen sich die Lichtverhältnisse beispielsweise beim Durchfliegen von Wolken oder Durchfahren von Tunneln ändern, wobei eine großräumige Ausleuchtung der Kabine oder des Abteils jedoch einerseits zu energieintensiv und andererseits nicht individuell anpassbar ist. Die individuelle Anpassbarkeit soll dabei die Möglichkeit schaffen, die Ausleuchtung eines bestimmten Sektors oder Objekts, die sich vorzugsweise innerhalb des Sitzplatzbereichs eines Passagiers befinden, auf die Wünsche des Passagiers anzupassen. Will der Passagier lesen, so soll ihm eine ausreichende Ausleuchtung des Informationsträgers zur Verfügung gestellt werden. Will er nicht lesen und beispielsweise eine Ruhepause einlegen, soll die Ausleuchtung ausschaltbar sein. Gleichzeitig soll die Ausleuchtung so gestaltet sein, dass der Nachbar nicht gestört wird.

Aus den Schriften DE 19926561 A1 und US 2010/091503 A1 ist jeweils eine Beleuchtungsvorrichtung, insbesondere eine Leseleuchte, mit einer Lichtquelle, einem die Lichtquelle tragenden Rahmen, welcher um eine horizontale Achse schwenkbar und eine vertikale Achse drehbar und in der ausgewählten Stellung feststellbar ausgeführt ist, bekannt. Das Licht wird durch jeweils eine Streulichtabdeckung bzw. einen Linsenkörper, der zugleich eine Abdeckung der Lichtquelle bildet, im Wesentlichen in Richtung der vertikalen Achse abgestrahlt.

Andere Formen der gattungsgemäßen Beleuchtungsvorrichtung sind beispielsweise aus der DE 19741038 A1 oder der US 2,011,692 A bekannt, bei der die Lichtquelle jeweils an einem drehbaren Bauteil, wie einem um seine Längsachse in einem Gehäuse drehbar gelagerten Schwenkzylinder, oder in einer schwenkbaren Klappe angeordnet ist.

Die WO 2006/041417 offenbart eine Leseleuchte, die sich auf der Unterseite eines Monitors befindet, der aus der Rücklehne eines Flugzeugsitzes heraus schwenkbar ist. Mit dieser Leseleuchte kann der Klapptisch beleuchtet werden. Allerdings ist diese Leseleuchte an den Monitor gebunden, so dass sie nur in bestimmten Positionen eingesetzt werden kann. Weiterhin muss der Monitor aus der Rücklehne heraus geschwenkt werden, damit die Leseleuchte aktiviert wird. Der Monitor deckt somit beispielsweise einen Teil des Informationsträgers ab und engt den ohnehin schon knappen Raum für den Passagier weiter ein.

Insbesondere bei der Verwendung einer derartigen Leseleuchte in Flugzeugen sind weitere besondere Anforderungen zu berücksichtigen. Der zur Verfügung stehende Bauraum ist in Flugzeugkabinen sehr begrenzt, weiterhin soll das Gewicht der Beleuchtungsvorrichtung so weit wie möglich reduziert werden. Zudem darf die Beleuchtungsvorrichtung kein Verletzungsrisiko darstellen und muss strengen Brandschutzanforderungen genügen und soll insbesondere schwer entflammbar sein.

Die WO 2008/055694 offenbart eine Beleuchtungsvorrichtung, die einerseits kompakt aufgebaut ist und andererseits eine flexible Ausleuchtung von Objekten gewährleistet, mit einer Lichtquelle und einem um einen Schwenk-Kipp-Punkt verschwenkbares und/oder verkippbares Lichtleitelement, das zumindest eine Lichtleitachse und zumindest eine Lichteinkoppelfläche sowie eine Lichtauskoppelfläche aufweist, wobei das Lichtleitelementaxial verschiebbar und so angeordnet ist, dass zwischen der Lichtquelle und der Lichteinkoppelfläche ein Freistrahlbereich bestehen kann. Diese Vorrichtung hat sich in der Praxis bewährt, jedoch stellt sie hohe Anforderungen an die Fertigungsgenauigkeit und benötigt eine relativ aufwendige Mechanik.

Aufgabe der vorliegenden Erfindung ist es daher, eine Beleuchtungsvorrichtung anzugeben, die den oben genannten Anforderungen entspricht, zuverlässig ist und gleichzeitig den Nachteilen der aus dem Stand der Technik bekannten Beleuchtungsvorrichtungen begegnet. Weiterhin soll die Beleuchtungsvorrichtung dem Benutzer ein hohes Maß an Bedienungskomfort bieten und eine ansprechende Optik und Haptik aufweisen.

Gelöst wird die Aufgabe mit einer Beleuchtungsvorrichtung, insbesondere mit einer Leseleuchte, umfassend eine Lichtquelle, einen bewegbaren Deckel, an welchem die Lichtquelle befestigbar ist, ein mit dem Deckel zusammenwirkendes Stellelement und eine Lagerungseinheit zum Lagern des Deckels und des Stellelements, wobei der Deckel und die Lichtquelle durch Betätigen des Stellelements um die Längsachse der Beleuchtungsvorrichtung und durch Betätigen des Deckels um eine senkrecht zur Längsachse verlaufende Querachse bewegbar sind. Das Stellelement ist für den Benutzer gut zugänglich, so dass der Deckel und die mit dem Deckel verbundene Lichtquelle mittels des Stellelements um die Längsachse bewegt und insbesondere um die Längsachse gedreht werden kann. Der von der Lichtquelle generierte Lichtkegel kann damit auf eine für den Benutzer bequeme Weise verstellt werden. Die erfindungsgemäße Gestaltung der Beleuchtungsvorrichtung ermöglicht es, die Anzahl der benötigten Bauteile zu reduzieren, wodurch ein kompakterer Aufbau der Beleuchtungsvorrichtung ermöglicht wird. Weiterhin führt die Reduzierung der Anzahl der Bauteile zu einer Erhöhung der Zuverlässigkeit der Beleuchtungsvorrichtung.

Ferner ist das Stellelement als ein den Deckel ringförmig umschließender Stellring ausgestaltet, wobei die Lichtquelle durch Betätigen des Deckels von einer ersten Stellung in eine zweite Stellung um die Querachse schwenkbar ist und die Lichtquelle in der ersten Stellung vom Stellring oder von der Lagerungseinheit verdeckt ist. Dadurch, dass die Lichtquelle vom Stellring in der ersten Stellung verdeckt wird, erzeugt sie keinen die Beleuchtungsvorrichtung verlassenden Lichtkegel. Für den Benutzer erscheint sie somit als ausgeschaltet, auch wenn sie dennoch eingeschaltet ist. In dieser Ausführung kann auf eine Schaltvorrichtung zum ein- und Ausschalten der Lichtquelle verzichtet werden, was einen kompakten Aufbau der Beleuchtungsvorrichtung ermöglicht. Die Lichtquelle kann dabei ständig eingeschaltet sein. Die Ausgestaltung des Stellelements als Stellring, der den Deckel umschließt, bietet dem Benutzer eine komfortable Möglichkeit, den Deckel zu drehen.

Eine bevorzugte Ausgestaltung der erfindungsgemäßen Beleuchtungsvorrichtung zeichnet sich dadurch aus, dass die Lichtquelle durch Betätigen des Deckels ein- und ausschaltbar ist, wobei sich die Lichtquelle in der ersten Stellung im ausgeschalteten Zustand und in der zweiten Stellung im eingeschalteten Zustand befindet. In dieser Ausgestaltung übernimmt der Deckel weiterhin eine Schaltfunktion, so dass auf ein weiteres Schalt- oder Betätigungselement verzichtet werden kann. Wie oben ausgeführt, wird durch Betätigen des Deckels der Deckel selbst und die mit ihm zusammenwirkende Lichtquelle um die Querachse der Beleuchtungsvorrichtung bewegt. Gleichzeitig ist durch Betätigen des Deckels die Lichtquelle ein- und ausschaltbar, so dass der Benutzer bestimmen kann, in welche Position er die Lichtquelle stellen und sie ein- oder ausschalten will. In der ersten Stellung ist die Lichtquelle vom Stellelement verdeckt, so dass sie keinen die Vorrichtung verlassenden Lichtkegel erzeugt. Somit trägt die Beleuchtungsvorrichtung in der ersten Stellung nicht zur Ausleuchtung eines bestimmten Sektors oder eines Objekts außerhalb der Beleuchtungsvorrichtung bei. In dieser Ausgestaltung wird die Lichtquelle in der ersten Stellung ausgeschaltet, so dass keine unnötige Energie verbraucht und keine unnötige Wärme innerhalb der Beleuchtungsvorrichtung erzeugt wird. Die Beleuchtungsvorrichtung kann somit energetisch günstiger und materialschonender und damit länger betrieben werden. Weiterhin dient der Deckel gleichzeitig als eine Art Tastwippe, mit der die Lichtquelle ein- und ausgeschaltet werden kann. Dies kann beispielsweise durch einen entsprechend gestalteten Kontaktschalter realisiert sein.

In einer Fortbildung der erfindungsgemäßen Beleuchtungsvorrichtung weist die Lichtquelle eine Strahlachse auf, die in der ersten Stellung gegenüber einer senkrecht zur Längsachse verlaufenden Ebene um einen Winkel zur zweiten Stellung hin geneigt ist. Der Deckel und die Lichtquelle können üblicherweise konstruktionsbedingt nicht in beliebigem Umfang um die Querachse bewegt werden. Ein bestimmter Verstellbereich kann typischerweise nicht überschritten werden. Es kann jedoch der Fall eintreten, dass ein Objekt beleuchtet werden soll, das mit dem zur Verfügung stehenden Verstellbereich nicht erreichbar ist, wenn die Strahlachse in der ersten Stellung der Lichtquelle senkrecht zur Längsachse verläuft. Die Neigung der Strahlachse der Lichtquelle in der ersten Stellung gegenüber der senkrecht zur Längsachse verlaufenden Ebene hin zur zweiten Stellung sorgt dafür, dass auch dieses Objekt beleuchtet werden kann. Vorzugsweise beträgt der Winkel zwischen 1 und 20°, typischerweise 8 bis 10°. Der Winkel wird entsprechend der Anordnung der zu beleuchtenden Objekte gewählt. Es kann eine Verstellvorrichtung vorgesehen sein, mittels derer sich der Winkel verstellen lässt, so dass der von der Lichtquelle erzeugte Lichtkegel auf einfache Weise an die Gegebenheiten der auszuleuchtenden Umgebung angepasst werden kann.

Weiterhin umfasst die Lagerungseinheit in einer weiteren Ausgestaltung einen Lagerring und ein darin einbringbares und bewegbares Tragelement, wobei das Tragelement mit dem Deckel verbindbar ist. Mit dieser Anordnung kann auf einfache Weise die benötigte Bewegbarkeit des Deckels bereitgestellt und gleichzeitig eine einfache Montage realisiert werden.

Es ist weiterhin bevorzugt, wenn der Deckel eine Stirnfläche und das Stellelement eine an die Stirnfläche angrenzende Oberfläche aufweisen, wobei die

Stirnfläche und die Oberfläche in der ersten Stellung kantenfrei zueinander verlaufen. Dies hat zum einen optische Vorteile, da die Beleuchtungsvorrichtung als eine homogene Einheit wirkt, und zum anderen wird dadurch erreicht, dass keine Kanten erzeugt werden, die ein Verletzungsrisiko darstellen können. Dabei müssen die Stirnfläche des Deckels und die sich der Stirnfläche anschlieβende Oberfläche des Stellelements nicht notwendigerweise planar sein, sondern können jeweils eine Wölbung aufweisen, die nicht stetig ineinander übergehen müssen. Ebenfalls ist es denkbar, dass die Stirnfläche planar ist, die sich der Stirnfläche anschließende Oberfläche des Stellelements jedoch gewölbt ist. Die Stirnfläche des Deckels kann dabei durchaus über die Oberfläche des Stellelements vorstehen oder aber im Stellelement versenkt sein.

Vorzugsweise umfasst die Lagerungseinheit ein Gehäuse, an dem das Stellelement bzw. der Stellring drehbar befestigbar ist. Das Stellelement bzw. der Stellring können mittels einer Bajonettverbindung am Gehäuse befestigt werden. Das Gehäuse schützt und stabilisiert die Beleuchtungsvorrichtung. Weiterhin dient das Gehäuse als Aufnahme des Stellelements, so dass hierzu keine weiteren Bauteile benötigt werden. Zur Aufnahme des Stellelements kann das Gehäuse an einem Ende einen radial überstehenden Kragen aufweisen.

In einer Fortbildung der erfindungsgemäßen Beleuchtungsvorrichtung umfasst die Lagerungseinheit eine Rastkurve, die beim Drehen des Stellrings durchlaufen wird. Die Rastkurve kann beispielsweise an der Oberfläche des Gehäuses angeordnet sein, die mit dem Stellelement zusammenwirkt. Die Rastkurve kann dabei eine Anzahl von Vorsprüngen aufweisen, die von einem elastischen Teil beim Drehen des Stellelements überwunden werden müssen. Die elastischen Teile können beispielsweise federbelastete Pins sein. Befindet sich das elastische Element in einer Vertiefung zwischen zwei benachbarten Vorsprüngen, wird eine Stellposition des Stellelements festgelegt. Je nach Anzahl der Vorsprünge werden mehr oder weniger Stellpositionen erzeugt. Einerseits wird verhindert, dass sich das Stellelement selbständig verstellt, andererseits erhält der Benutzer eine haptische Rückmeldung, die ihm eine gewisse Führung beim Drehen des Stellelements gibt.

Vorzugsweise weist das Gehäuse eine Mantelfläche mit einem Gewinde auf, auf welches eine oder mehrere Montagemuttern aufschraubbar sind. Das Gehäuse kann in eine Einbauöffnung beispielsweise einer Trennwand oder eines Flugzeugsitzes eingesetzt und mittels der Montagemuttern an den die Einbauöffnung umgebenden Oberflächen befestigt werden. Weist das Gehäuse den radial überstehenden Kragen auf, auf den das Stellelement aufgesetzt wird, dient der Kragen zusätzlich als Auflagefläche, mit welcher die Beleuchtungsvorrichtung auf die die Einbauöffnung umgebenden Oberflächen aufgesetzt und mittels der Montagemutter über die auf der gegenüberliegenden Seite der Wandung liegenden Oberflächen verspannt werden kann. In diesem Fall wird nur eine Montagemutter benötigt. Weist das Gehäuse den radial überstehenden Kragen nicht auf, kann die Beleuchtungsvorrichtung mit zwei Montagemuttern verspannt werden. Je weiter sich die Montagemuttern und der radial überstehende Kragen radial über das Gehäuse erstrecken, desto größer kann auch die Einbauöffnung sein, in welche die Befestigungsvorrichtung einsetzbar ist. Hierdurch wird eine erhöhte Flexibilität bei der Montage ermöglicht, da kein speziell auf die Beleuchtungsvorrichtung angepasster Bohrungsdurchmesser für die Einbauöffnung vorgesehen werden muss. Eine besondere Toleranz oder Genauigkeit muss ebenfalls nicht eingehalten werden. Weiterhin kann die Beleuchtungsvorrichtung in Wandungen mit unterschiedlicher Wandstärke eingebaut werden.

Weiterhin ist es vorteilhaft, wenn das Tragelement eine Lagerfläche mit einer Ausnehmung oder einem Durchbruch aufweist und der von der Lichtquelle erzeugte Lichtkegel die Ausnehmung oder den Durchbruch durchscheint oder die Lichtquelle in der Ausnehmung oder im Durchbruch angeordnet ist. Die Lagerfläche bewirkt, dass das Tragelement im Lagerring beweglich ist und vom

Lagerring gehalten wird. Je nach Ausgestaltung bewirkt der Durchbruch oder die Ausnehmung, dass die Lichtquelle im Tragelement und damit raumsparend angeordnet werden kann. Das Tragelement dient daher nicht nur der Lagerung des Deckels, sondern auch der Befestigung der Lichtquelle.

Vorzugsweise ist der Deckel durch Verstellen von der zweiten in eine dritte Stellung mittels eines Verriegelungselements verriegelbar und vorspannbar und wird infolge der Vorspannkraft in die erste Stellung bewegt, und ist durch Verstellen von der ersten in die dritte Stellung entriegelbar und wird infolge der Vorspannkraft in die zweite Stellung bewegt. Hierdurch wird für den Benutzer eine besonders einfache Bedienbarkeit bereitgestellt. Zum Bewegen des Deckels und damit zum Einschalten der Lichtquelle muss der Benutzer den Deckel nur in eine dritte Stellung stellen, was vorzugsweise durch Drücken des Deckels in der ersten Stellung geschieht. Die dritte Stellung liegt dabei auf der von der zweiten Stellung abgewandten Seite der senkrecht zur Längsachse verlaufenden Ebene. In der dritten Stellung wird das Verriegelungselement entriegelt und der Deckel infolge der Vorspannkraft in die zweite Stellung bewegt, sobald der Benutzer den Deckel freigibt. Zum Verriegeln des Deckels bewegt der Benutzer den Deckel gegen die Vorspannkraft in die dritte Stellung, in welcher das Verriegelungselement verriegelt wird. Der Deckel bewegt sich dann infolge der Vorspannkraft zurück in die erste verriegelte Stellung, in welcher er solange verbleibt, bis er vom Benutzer wieder auf die zuvor beschriebene Weise entriegelt wird.

Bevorzugt ist der Deckel mittels eines Federelements vorspannbar. Federelemente sind weit verbreitete und damit kostengünstig beziehbare Bauteile, die sich durch eine hohe Zuverlässigkeit und ein geringes Gewicht auszeichnen. Weiterhin sind die Federelemente auch in räumlich beengten Umgebungen einsetzbar, so dass die Vorspannung des Deckels auf raum-, kosten- und gewichtssparende Weise realisierbar ist. Durch Bewegen des Deckels von der 30. November 2015 P3689 EP zweiten in die dritte Stellung wird das Federelement vorgespannt, so dass die Vorspannkraft erzeugt wird.

In einer weiteren Ausgestaltung weisen das Tragelement eine Zahnstange und der Lagerring ein Dämpfungselement auf, die zum Bewegen des Deckels um die Querachse zusammenwirken und die Bewegbarkeit des Deckels um die Querachse begrenzen. Weiterhin bremsen sie die Bewegung des Deckels zwischen der ersten bzw. der dritten und der zweiten Stellung. Das Bewegen des Deckels zwischen der ersten bzw. der dritten und der zweiten Stellung geschieht damit auf eine sanfte Weise, so dass der Deckel nicht ruckartig von der ersten bzw. dritten Stellung in die zweite Stellung springt. Die Bauteile werden somit geschont, da ein hartes Anschlagen verhindert wird. Das Dämpfungselement weist dabei ein Zahnrad mit einer entsprechend gedämpften Lagerung auf, welches auf der Zahnstange abrollt. Die Zahnstange ist gebogen und folgt der Bewegung des Tragelements. Die Begrenzung der Bewegbarkeit kann dadurch erreicht werden, dass das Zahnrad oder die Zahnstange einen erhöhten Zahn aufweisen, der das Abrollen des Zahnrads auf der Zahnstange ab einer bestimmten Stellung unterbindet. Alternativ kann die Verzahnung beispielsweise der Zahnstange enden, so dass die Zähne des Zahnrads nicht mehr mit den korrespondierenden Zähnen der Zahnstange zusammenwirken können, wodurch ab einer bestimmten Stellung des Tragelements relativ zum Lagerring die Bewegbarkeit nicht mehr gegeben ist. Die aktive Begrenzung der Bewegbarkeit ist insbesondere deshalb wichtig, weil aus konstruktiven Gründen nur ein bestimmtes Maß der Bewegbarkeit zwischen der ersten und der zweiten Stellung realisierbar ist, welches nicht überschritten werden darf, da sonst das Tragelement aus dem Lagerring herausgelöst werden könnte.

Weiterhin weist die Beleuchtungsvorrichtung ein mit dem Gehäuse zusammenwirkenden Fixierelement zum Fixieren des Lagerrings und des Tragelements auf. Auf diese Weise können der Lagerring und das Tragelement auf einfache Weise in ihrer Position fixiert werden, wozu das Fixierelement und das Gehäuse mittels einer Klips- oder Schnappverbindung verbunden werden können. Das Fixierelement schließt das Gehäuse auf der dem Deckel gegenüberliegenden Seite ab, so dass keine Feuchtigkeit in das Gehäuse eindringen kann. Dies ist insbesondere im Hinblick auf die im Innenraum des Gehäuses angeordneten elektronischen Teile wichtig.

In einer bevorzugten Weiterentwicklung ist die Lichtquelle um 40° oder weniger um die Längsachse (L) und um 40° oder weniger um die Querachse (Q) drehoder schwenkbar ist, wobei die Bewegbarkeit der Lichtquelle um die Längsachse (L) mittels eines oder mehrerer Anschlagelemente (42) begrenzbar ist. Hierdurch kann beispielsweise verhindert werden, dass die Lichtquelle auf einen Gegenstand gerichtet wird, der sich auf dem Sitz des Nachbarn befindet. Störungen des Nachbarn werden somit verhindert. Weiterhin wird verhindert, dass die Lichtquelle mehrmals in derselben Drehrichtung um die Längsachse gedreht wird, was zu einer Verdrehung und gegebenenfalls zu einer Beschädigung der Kabel oder zum Bruch von Lötverbindungen führen kann. Ein weiterer technischer Effekt ergibt sich daraus, dass der Stellring, der mittels einer Bajonettverbindung am Gehäuse befestigt ist, nicht in eine Stellung gedreht werden kann, in welcher die Bajonettverbindung getrennt und der Stellring vom Gehäuse entfernt werden kann.

Vorzugsweise ist die Lichtquelle um 80° oder weniger um die Längsachse und um 40° oder weniger um die Querachse dreh- oder schwenkbar, wobei die Bewegbarkeit der Lichtquelle um die Längsachse mittels eines oder mehrerer Anschlagelemente begrenzbar ist. Es hat sich herausgestellt, dass eine Drehund Schwenkbarkeit innerhalb dieses Winkelbereichs für den erfindungsgemäßen Gebrauch ausreicht und gleichzeitig konstruktiv gut beherrschbar ist, ohne dass gesonderte Maßnahmen ergriffen werden müssen, die weiteren Bauraum benötigen. Der Aufbau der Beleuchtungsvorrichtung kann somit konstruktiv einfach und kompakt ausgeführt werden. Die Anschlagelemente können vorzugsweise in Winkelschritten von 5° verstellt werden, so dass innerhalb des angegebenen Winkelbereichs bevorzugte Zwischenstellungen eingestellt werden können. Hierdurch können Besonderheiten der auszuleuchtenden Umgebung berücksichtigt werden.

Vorzugsweise umfasst die Lichtquelle eine LED mit einer Linse zum Fokussieren des Strahlengangs. LEDs zeichnen sich durch eine hohe Energieausnutzung bei geringer Wärmeentwicklung und geringem Platzbedarf aus. Weiterhin kann mit der Linse der gewünschte Lichtkegel erzeugt werden, mit dem beispielsweise die Informationsträger oder der Klapptisch im Flugzeug beleuchtet werden kann. In einer Weiterentwicklung ist die LED auf einer ersten Schaltplatine montiert, die im Deckel angeordnet ist. Die erste Schaltplatine umfasst einen Mikroschalter, der beim Verstellen des Deckels von der ersten in die zweite Stellung dafür sorgt, dass die LED eingeschaltet und beim Verstellen von der zweiten in die erste Stellung ausgeschaltet wird. Diese Anordnung ermöglicht einen kompakten Aufbau der Beleuchtungsvorrichtung. Dabei ist die erste Schaltplatine über einen Kabelbaum mit einer zweiten Schaltplatine verbindbar, welche die Spannungsversorgung und die Kontrolleinrichtung für die LED aufweist. Das Vorsehen von zwei Schaltplatinen schafft eine Platzersparnis im Deckel.

Weiterhin ist es bevorzugt, wenn der Deckel einen oder mehrere transparente Bereiche aufweist, die mit mindestens einer weiteren Lichtquelle beleuchtbar sind. Dabei kann es hilfreich sein, mindestens einen Lichtleiter hinter dem transparenten Bereich im Deckel vorzusehen, um den transparenten Bereich homogen auszuleuchten. Die transparenten Bereiche dienen als Orientierungshilfe im Dunkeln, um die Position der Beleuchtungsvorrichtung und insbesondere des Deckels ermitteln zu können. Der transparente Bereich ist unabhängig von der Lichtquelle beleuchtbar und kann immer oder nur dann, wenn die Lichtquelle ausgeschaltet ist, oder in Abhängigkeit der Lichtverhältnisse der Umgebung beleuchtet sein. Dabei kann die weitere Lichtquelle ebenfalls als LED ausgeführt sein, die auf der ersten Schaltplatine angeordnet ist. Um Platz einzusparen, kann die weitere Lichtquelle so klein wie möglich ausgeführt werden. Der Lichtleiter dient dazu, den transparenten Bereich homogen auszuleuchten.

Vorzugsweise bestehen der Deckel aus einem Polykarbonat und das Stellelement aus einem Acrylnitril-Butadien-Styrol (ABS) oder sie umfassen Polykarbonat und/oder Acrylnitril-Butadien-Styrol. Polykarbonate und PC/ABS-Blends oder Polyamid, welche glasfaserverstärkt sein können, sind besonders geeignet, um optisch und haptisch ansprechende Oberflächen kostengünstig herzustellen. Neben der erhöhten Festigkeit hat die Glasfaserverstärkung weiterhin den Vorteil, dass sie brandhemmend wirkt, so dass die Brandschutzanforderungen insbesondere der Luftfahrt erfüllt werden können. Diese Oberflächen können weiterhin mit üblicherweise verwendeten Reinigungsmitteln gesäubert werden und verfärben sich nicht bei der Einwirkung von Rotwein oder anderen Getränken. Zudem sind diese Oberflächen abriebfest, auch dann, wenn sie lackiert sind. Der Deckel und das Stellelement können im Spritzgussverfahren ohne sichtbare Entformungs-Trennlinien hergestellt werden. Hinsichtlich einer hohen Gestaltungsvielfalt können der Deckel und das Stellelement unterschiedlich lackiert sein. Besonders geeignet sind daher Lacksysteme, welche aus Haftvermittlern, Basislacken und einem klaren Decklack bestehen, wobei je nach verwendetem Kunststoff der Haftvermittler auch weggelassen werden kann. Alternativ können der Deckel und/oder das Stellelement verchromt oder beispielsweise mittels eines *"plasma induced chemical vapor deposition"* Verfahrens (PICVD) beschichtet sein. Die Dicke der Lack- oder Chromschicht beträgt in etwa zwischen 20 und 40 µm.

Ein weiterer Aspekt der vorliegenden Erfindung betrifft die Verwendung einer Beleuchtungsvorrichtung nach einem der vorherigen Ausführungsbeispiele insbesondere als Leseleuchte in Flugzeugen, Schiffen, Zügen, Automobilen oder anderen Fahrzeugen. Die sich hieraus ergebenden Vorteile entsprechen denjenigen, die für die verschiedenen Ausführungsbeispiele der Beleuchtungsvorrichtung diskutiert worden sind.

Die Erfindung wird unter Bezugnahme auf die anhängenden Zeichnungen anhand eines bevorzugten Ausführungsbeispiels im Detail erläutert. Es zeigen
- Figur 1: eine Explosionszeichnung eines Ausführungsbeispiels der erfindungsgemäßen Beleuchtungsvorrichtung,
- Figur 2: das in Figur 1 dargestellte Ausführungsbeispiel der erfindungsgemäßen Beleuchtungsvorrichtung im zusammengebauten Zustand in der ersten Stellung,
- Figur 3: das in den Figuren 1 und 2 dargestellte Ausführungsbeispiel in der zweiten Stellung, und
- Figur 4: eine prinzipielle Darstellung der Anordnung des Deckels und der Lichtquelle und der Strahlenachse relativ zur Längsachse der Beleuchtungsvorrichtung.

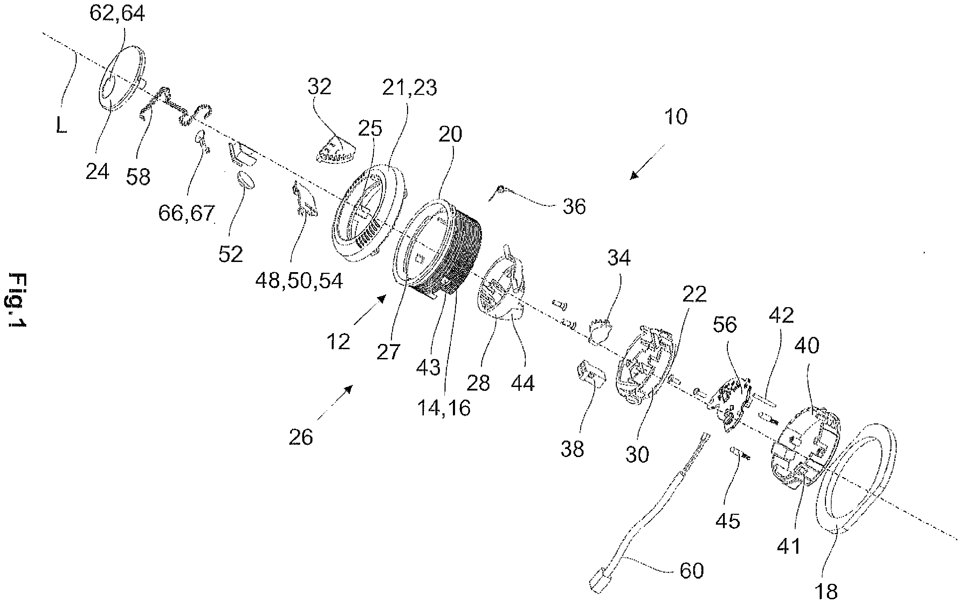

Das in Figur 1 dargestellte Ausführungsbeispiel der erfindungsgemäßen Beleuchtungsvorrichtung 10 umfasst ein Gehäuse 12 mit einer Mantelfläche 14, auf dem sich ein Gewinde 16 befindet, auf das eine Montagemutter 18 aufgeschraubt werden kann. Das Gehäuse 12 weist einen radial überstehenden Kragen 20 auf, auf dem ein um eine Längsachse L der Beleuchtungsvorrichtung 10 drehbares Stellelement 21 befestigt werden kann. Im dargestellten Beispiel ist das Stellelement 21 als ein einen Deckel 24 umschließender Stellring 23 ausgebildet. Der Stellring 23 wird mittels einer Bajonettverbindung am Gehäuse 12 befestigt. Hierzu weist der Stellring 23 ein Rastelement 25 auf, welches mit einem Vorsprung 27 auf der Innenfläche des Gehäuses 12 zusammenwirkt und den Stellring 23 axial fixiert. Der Vorsprung 27 erstreckt sich über einen weiten Bereich entlang der Innenfläche, so dass der Stellring 23 im befestigten Zustand über einen entsprechenden Winkelbereich gedreht werden kann, ohne dass die axiale Fixierung aufgehoben wird.

Weiterhin weist die Beleuchtungsvorrichtung 10 den Deckel 24 auf, welcher mittels einer Lagerungseinheit 26 dreh- und schwenkbar gelagert ist. Der Deckel 24 wirkt mit dem Stellelement 21 zusammen, so dass er durch Drehen des Stellelements 21 um die Längsachse L der Beleuchtungsvorrichtung 10 gedreht werden kann. Dabei kann das Stellelement 21 direkt mit dem Deckel 24 oder indirekt mit der Lagerungseinheit 26 zusammenwirken. Im letzen Fall wird der Deckel 24 dadurch gedreht, dass die Lagerungseinheit 26 vom Stellelement 21 gedreht wird. Die Lagerungseinheit 26 umfasst dabei ein mit dem Deckel 24 verbundenes Tragelement 28, das in einen Lagerring 30 einbringbar und an diesem befestigbar ist. Das Tragelement 28 kann dabei im Lagerring 30 sowohl um die Längsachse L als auch um eine senkrecht zur Längsachse L verlaufende Querachse Q gedreht werden.

Der Lagerring 30 weist weiterhin eine Zahnstange 32 auf, die mit einem Dämpfungselement 34 zusammenwirkt, das im Tragelement 28 angeordnet ist. Das Tragelement 28 wird gegenüber dem Lagerring 30 mittels eines Federelements 36 vorgespannt. Um das Tragelement 28 in der ersten Stellung zu verriegeln, ist ein Verriegelungselement 38 vorgesehen, das mit dem Tragelement 28 und dem Lagerring 30 zusammenwirkt. Die Zahnstange 32 und das das Verriegelungselement 38 legen eine erste, eine zweite und eine dritte Stellung fest, zwischen denen das Tragelement 28 und damit der Deckel 24 bewegt werden können.

Das Tragelement 28 und der Lagerring 30 werden mittels eines Fixierelements 40 im Gehäuse 12 positioniert und befestigt. Das Fixierelement weist einen oder mehrere Fixierhaken 41 auf, die in Öffnungen oder Vertiefungen 43 des Gehäuses 12 eingreifen. Im Fixierelement 40 sind weiterhin ein oder mehrere Anschlagelemente 42 vorgesehen, mit denen die Bewegbarkeit des Deckels 24 um die Längsachse L begrenzt werden kann. Die Begrenzung der Bewegbarkeit des Deckels 42 ist weiterhin deshalb wichtig, da somit verhindert wird, dass der Deckel 42 in eine Position gedreht werden kann, in welcher die Bajonettverbindung zum Gehäuse 12 aufgelöst werden kann. Der Lagerring 30 umfasst eine Rastkurve 22, die mit dem Fixierelement 40 zusammenwirkt. Hierzu sind federvorgespannte Pins 45 vorgesehen, die in entsprechende Löcher des Fixierelements 40 eingebracht werden können. Deren freies Ende wirkt mit der Rastkurve 22 zusammen, gleichzeitig spannen die Pins 45 die tragenden Komponenten der Beleuchtungsvorrichtung 10 vor, so dass sie auch bei starken Vibrationen, wie sie insbesondere in Flugzeugkabinen vorkommen kann, nicht klappern. Beim Drehen des Stellelements 21 wird der Lagerring 30 ebenfalls gedreht und die Rastkurve 22 durchlaufen. Dabei muss abwechselnd eine stärkere oder eine geringere Kraft aufgewendet werden, die der Benutzer beim Drehen des Stellelements aufbringen muss und somit eine haptische Rückmeldung erhält.

Das Tragelement 28 weist eine Lagerfläche 44 mit einem Durchbruch oder einer Ausnehmung 46 auf. Im Durchbruch oder in der Ausnehmung 46 und/oder radial einwärts hiervon ist eine Lichtquelle 48 angeordnet, die eine Linse 52 und eine LED 50 sowie eine erste Schaltplatine 54 umfasst. Die Linse 52 deckt dabei den Durchbruch oder die Ausnehmung 46 ab. Im Fixierelement 40 ist eine zweite Schaltplatine 56 angeordnet, die über einen Kabelbaum 58 mit der ersten Schaltplatine 54 verbunden ist. Von der zweiten Schaltplatine 56 führt eine Leitung 60 zur Energieversorgung ab, die auch als Pigtail 60 bezeichnet wird. Mit dem Pigtail 60 kann die Beleuchtungsvorrichtung 10 an ein Energieversorgungsnetz beispielsweise des Flugzeugs angeschlossen werden. Die Linse 52 fokussiert das von der LED 50 erzeugte Licht, so dass eine Strahlachse S vorliegt. Diese ist erfindungsgemäß in der ersten Stellung des Deckels 24 gegenüber einer senkrecht zur Längsachse L verlaufenden Ebene um einen Winkel α zur zweiten Stellung hin geneigt. Dies kann entweder durch einen entsprechend ausgerichteten Einbau der LED 50 oder dadurch geschehen, dass die verwendete Linse 52 eine entsprechende Wölbung aufweist.

Der Deckel 24 weist eine Stirnfläche 68 mit einem oder mehreren transparenten Bereichen 62 auf. Diese können beispielsweise dadurch erzeugt werden, dass der Deckel 24 aus einem transparenten Material gefertigt und mit Ausnahme der transparenten Bereiche 62 mit einem intransparenten Lack beschichtet wird. Die transparenten Bereiche 62 werden mittels eines Lichtleiters 66 und einer weiteren Lichtquelle 67 beleuchtet. Der transparente Bereich 62 ist dabei in einer Mulde 64 der Stirnfläche 68 angeordnet, die dem Benutzer einen Anhaltspunkt gibt, wo der Deckel 24 vorzugsweise zu betätigen ist.

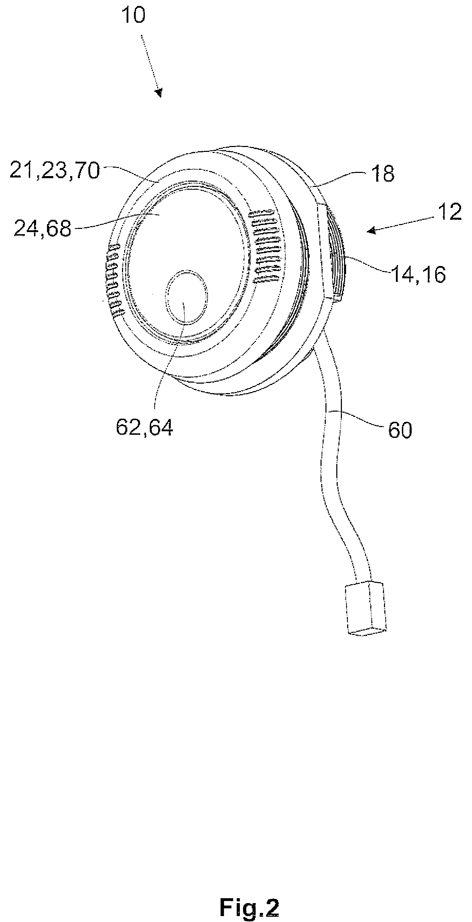

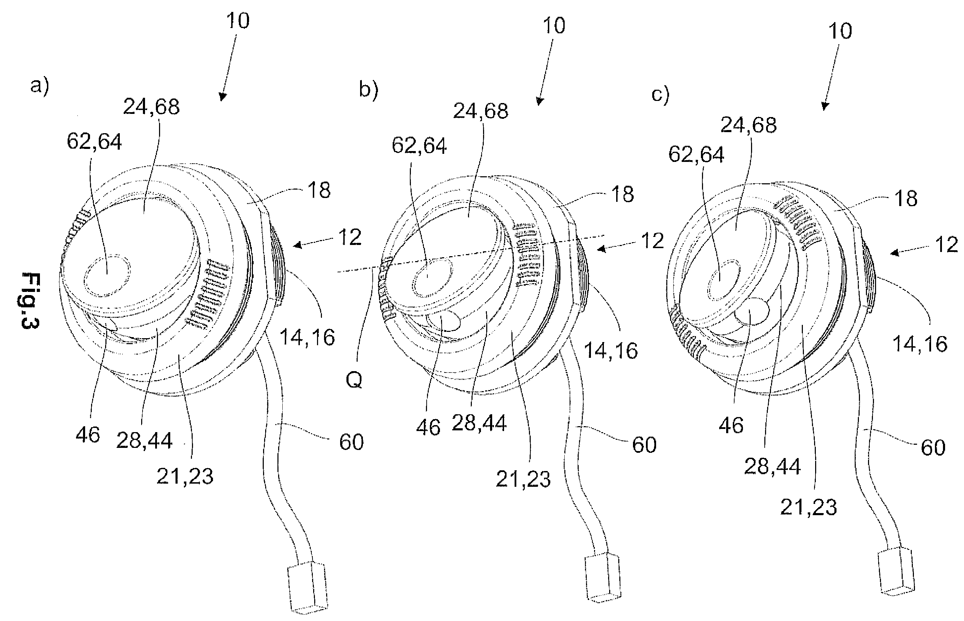

In Figur 2 ist die erfindungsgemäße Beleuchtungsvorrichtung 10 im zusammengebauten Zustand in der ersten Stellung gezeigt. Das Stellelement 21 weist eine Oberfläche 70 auf, die ohne nach außen stehende Kanten angrenzend zur Stirnfläche 68 verläuft. Durch Drücken des Deckels 24 in eine dritte Stellung wird das Verriegelungselement 38 entriegelt, so dass das Tragelement 28 unter Einwirkung der vom Federelement 36 aufgebrachten Vorspannkraft in die zweite Stellung gestellt wird, die in Figur 3 gezeigt ist. Gleichzeitig wird die Lichtquelle 48 eingeschaltet. Der Durchbruch 46 ist in der zweiten Stellung nicht mehr vom Stellelement 21 oder von der Lagerungseinheit 26 verdeckt. Folglich kann ein Lichtkegel die Beleuchtungsvorrichtung 10 verlassen und ein Objekt ausleuchten. Durch Drehen des Stellelements 21 kann der Lichtkegel um die Längsachse L der Beleuchtungsvorrichtung 10 gedreht werden. In Figur 3a) ist das Stellelement 21 und damit der Deckel 24 um ca. 30° nach links und in Figur 3c) um ca. 30° nach rechts gedreht, jeweils ausgehend von der in Figur 3b) dargestellten Mittelposition.

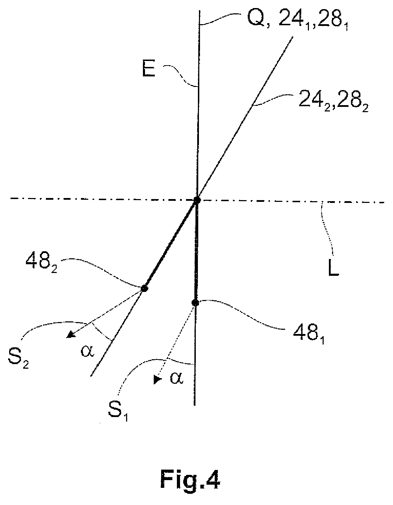

Figur 4 zeigt auf prinzipielle Weise, wie die Lichtquelle 48 und das Tragelement 28 mit dem Deckel 24 zwischen der ersten und der zweiten Stellung verstellt werden. Die erste Stellung ist dabei mit dem Index 1 und die zweite Stellung mit dem Index 2 gekennzeichnet. Der Deckel 24 ist stark vereinfacht als Linie dargestellt, welche entlang der maximalen Erstreckung des Deckels verläuft. Da die Lichtquelle 48 am Tragelement 28 befestigt ist, befindet sie sich auf der Linie, die den Deckel 24 und das Tragelement 28 symbolisiert. Die Längsachse L und die Querachse Q definieren eine Ebene E, wobei die Ebene E senkrecht zur Längsachse L und die Querachse Q in der Ebene E verlaufen. Es wird angenommen, dass der Deckel 24 in der ersten Stellung entlang der Querachse Q verläuft. Die Strahlenachse S der Lichtquelle 48, die an der Lagerfläche 44 des Tragelements 28 angeordnet ist, verläuft aber nicht parallel zur Querachse Q, sondern bildet mit ihr einen Winkel α. Wird das Tragelement 28 mit dem Deckel 24 in die zweite Stellung gebracht, wandert der Winkel α mit. Auf diese Weise wird erreicht, dass die Strahlenachse S in Bezug auf die Ebene E in der zweiten Stellung einen Winkel bildet, der um α größer ist als der Winkel, um den das Tragelement und der Deckel zwischen der ersten und der zweiten Stellung geschwenkt worden sind.

### Bezugszeichenliste

- 10: Beleuchtungsvorrichtung
- 12: Gehäuse
- 14: Mantelfläche
- 16: Gewinde
- 18: Montagemutter

- 20: radial überstehender Kragen
- 21: Stellelement
- 22: Rastkurve
- 23: Stellring
- 24: Deckel
- 25: Rastelement
- 26: Lagerungseinheit
- 27: Vorsprung
- 28: Tragelement

- 30: Lagerring
- 32: Zahnstange
- 34: Dämpfungselement
- 36: Federelement
- 38: Verriegelungselement

- 40: Fixierelement
- 41: Fixierhaken
- 42: Anschlagelement
- 43: Öffnung, Vertiefung
- 44: Lagerfläche
- 45: vorgespannter Pin
- 46: Durchbruch/Ausnehmung
- 48: Lichtquelle

- 50: LED
- 52: Linse
- 54: erste Schaltplatine
- 56: zweite Schaltplatine
- 58: Kabelbaum

- 60: Leitung/Pigtail
- 62: transparenter Bereich
- 64: Mulde
- 66: Lichtleiter
- 67: Lichtquelle
- 68: Stirnfläche

- 70: Oberfläche

- E: Ebene
- L: Längsachse
- Q: Querachse
- S: Strahlachse

- α: Winkel

## Patentansprüche

1. Beleuchtungsvorrichtung, insbesondere Leselampe, mit
- einer Lichtquelle (48),
- einem bewegbaren Deckel (24), an welchem die Lichtquelle (48) befestigt ist,
- einem mit dem Deckel (24) zusammenwirkenden Stellelement (21), und
- einer Lagerungseinheit (26) zum Lagern des Deckels (24) und des Stellelementes (21),
wobei der Deckel (24) und die Lichtquelle (48) durch Betätigen des Stellelements (21) um die Längsachse (L) der Beleuchtungsvorrichtung (10) und durch Betätigen des Deckels (24) um eine senkrecht zur Längsachse (L) verlaufende Querachse (Q) bewegbar sind,
**dadurch gekennzeichnet, dass** das Stellelement (21) als ein den Deckel (24) ringförmig umschließender Stellring (23) ausgebildet ist und die Lichtquelle (48) durch Betätigen des Deckels (24) von einer ersten Stellung in eine zweite Stellung um die Querachse (Q) schwenkbar ist, wobei die Lichtquelle (48) in der ersten Stellung vom Stellring (23) und von der Lagerungseinheit (26) verdeckt ist, so dass die Lichtquelle keinen die Beleuchtungsvorrichtung verlassenden Lichtkegel erzeugt.

2. Beleuchtungsvorrichtung nach Anspruch 1,
**dadurch gekennzeichnet, dass** die Lichtquelle (48) durch Betätigen des Deckels (24) ein- und ausschaltbar ist, wobei sich die Lichtquelle (48) in der ersten Stellung im ausgeschalteten Zustand und in der zweiten Stellung im eingeschalteten Zustand befindet.

3. Beleuchtungsvorrichtung nach einem der vorherigen Ansprüche , **dadurch gekennzeichnet, dass** die Lichtquelle (48) eine Strahlachse (S) aufweist, die in der ersten Stellung gegenüber einer senkrecht zur Längsachse (L) verlaufenden Ebene (E) um einen Winkel (α) zur zweiten Stellung hin geneigt ist, der bevorzugt zwischen 1° und 20° beträgt.

4. Beleuchtungsvorrichtung nach einem der vorherigen Ansprüche,
**dadurch gekennzeichnet, dass** die Lagerungseinheit (26) einen Lagerring (30) und ein darin einbringbares und bewegbares Tragelement (28) umfasst, wobei das Tragelement (28) mit dem Deckel (24) verbindbar ist.

5. Beleuchtungsvorrichtung nach einem der vorstehenden Ansprüche,
**dadurch gekennzeichnet, dass** die Lagerungseinheit (26) ein Gehäuse (12) umfasst, an dem der Stellring (23) drehbar befestigbar ist.

6. Beleuchtungsvorrichtung nach Anspruch 5,
**dadurch gekennzeichnet, dass** die Lagerungseinheit (26) eine Rastkurve (22) umfasst, die beim Drehen des Stellrings (23) durchlaufen wird.

7. Beleuchtungsvorrichtung nach Anspruch 4,
**dadurch gekennzeichnet, dass** das Tragelement (28) eine Lagerfläche (44) mit einer Ausnehmung oder einem Durchbruch (46) aufweist und der von der Lichtquelle (48) erzeugte Lichtkegel die Ausnehmung oder den Durchbruch (46) durchscheint oder die Lichtquelle (48) in der Ausnehmung oder im Durchbruch (46) angeordnet ist.

8. Beleuchtungsvorrichtung nach einem der vorherigen Ansprüche,
**dadurch gekennzeichnet, dass** der Deckel (24) durch Verstellen von der zweiten in eine dritte Stellung mittels eines Verriegelungselements (38) verriegelbar und vorspannbar ist und infolge der Vorspannkraft in die erste Stellung bewegt wird, und durch Verstellen von der ersten in die dritte Stellung entriegelbar ist und infolge der Vorspannkraft in die zweite Stellung bewegt wird.

9. Beleuchtungsvorrichtung nach Anspruch 8,
**dadurch gekennzeichnet, dass** der Deckel (24) mittels eines Federelements (36) vorspannbar ist.

10. Beleuchtungsvorrichtung nach einem der Ansprüche 6 bis 9 und Anspruch 4,
**dadurch gekennzeichnet, dass** das Tragelement (28) eine Zahnstange (32) und der Lagerring (30) ein Dämpfungselement aufweisen, die zum Bewegen des Deckels (24) um die Querachse (Q) zusammenwirken und die Bewegbarkeit des Deckels (24) um die Querachse (Q) begrenzen.

11. Beleuchtungsvorrichtung nach einem der Ansprüche 6 bis 10 und Anspruch 4
**gekennzeichnet durch** ein mit dem Gehäuse (12) zusammenwirkenden Fixierelement (40) zum Fixieren des Lagerrings (30) und des Tragelements (28).

12. Beleuchtungsvorrichtung nach Anspruch 10 oder 11,
**dadurch gekennzeichnet, dass** die Lichtquelle (48) um 80° oder weniger um die Längsachse (L) und um 40° oder weniger um die Querachse (Q) dreh- oder schwenkbar ist, wobei die Bewegbarkeit der Lichtquelle um die Längsachse (L) mittels eines oder mehrerer Anschlagelemente (42) begrenzbar ist.

13. Beleuchtungsvorrichtung nach einem der vorherigen Ansprüche,
**dadurch gekennzeichnet, dass** die Lichtquelle (48) eine LED (50) mit einer Linse (52) zum Fokussieren des Strahlengangs (S) umfasst, wobei die LED (50) auf einer ersten Schaltplatine (54) montiert ist, die im Deckel (24) angeordnet und die erste Schaltplatine (54) über einen Kabelbaum (58) mit einer zweiten Schaltplatine (56) verbindbar ist.

14. Beleuchtungsvorrichtung nach Anspruch 13,
**dadurch gekennzeichnet, dass** der Deckel (24) einen oder mehrere transparente Bereiche (62) aufweist, die mittels mindestens einer weiteren Lichtquelle (67) beleuchtbar sind.

15. Verwendung einer Beleuchtungsvorrichtung (10) nach einem der vorherigen Ansprüche insbesondere als Leseleuchte in Flugzeugen, Schiffen, Zügen, Automobilen oder anderen Fahrzeugen.

## Claims

1. Lighting device, in particular reading lamp, having
- a light source (48),
- a movable cover (24), to which the light source (48) is fixed,
- a control element (21) interacting with the cover (24), and
- a supporting unit (26) for supporting the cover (24) and the control element (21),
the cover (24) and the light source (48) being movable about the longitudinal axis (L) of the lighting device (10) by actuating the control element (21) and being movable about a transverse axis (Q) extending at right angles to the longitudinal axis (L) by actuating the cover (24),
**characterized in that** the control element (21) is formed as a control ring (23) enclosing the cover (24) annularly, and the light source (48) can be pivoted about the transverse axis (Q) from a first position into a second position by actuating the cover (24), wherein, in the first position, the light source (48) is concealed by the control ring (23) and by the supporting unit (26), so that the light source generates no cone of light leaving the lighting device.

2. Lighting device according to Claim 1, **characterized in that** the light source (48) can be switched on and off by actuating the cover (24), wherein the light source (48) is switched off in the first position and is switched on in the second position.

3. Lighting device according to one of the preceding claims,
**characterized in that** the light source (48) has a beam axis (S) which, in the first position, is inclined towards the second position by an angle (α) which is preferably between 1° and 20° with respect to a plane (E) extending at right angles to the longitudinal axis (L).

4. Lighting device according to one of the preceding claims,
**characterized in that** the supporting unit (26) comprises a supporting ring (30) and a movable carrying element (28) that can be introduced therein, wherein the carrying element (28) can be connected to the cover (24).

5. Lighting device according to one of the preceding claims,
**characterized in that** the supporting unit (26) comprises a housing (12), to which the control ring (23) can be rotatably fixed.

6. Lighting device according to Claim 5,
**characterized in that** the supporting unit (26) comprises an indexing cam (22), which is traversed as the control ring (23) is rotated.

7. Lighting device according to Claim 4,
**characterized in that** the carrying element (28) has a supporting surface (44) with a cut-out or an aperture (46), and the cone of light generated by the light source (48) shines through the cut-out or the aperture (46), or the light source (48) is arranged in the cut-out or in the aperture (46).

8. Lighting device according to one of the preceding claims,
**characterized in that**, by means of displacement from the second into a third position, the cover (24) can be locked by means of a locking element (38) and preloaded, and is moved into the first position as a result of the preloading force, and by means of displacement from the first into the third position, can be unlocked and is moved into the second position as a result of the preloading force.

9. Lighting device according to Claim 8, **characterized in that** the cover (24) can be preloaded by means of a spring element (36).

10. Lighting device according to one of Claims 6 to 9 and Claim 4,
**characterized in that** the carrying element (28) has a rack (32) and the supporting ring (30) has a damping element, which interact in order to move the cover (24) about the transverse axis (Q) and limit the mobility of the cover (24) about the transverse axis (Q).

11. Lighting device according to one of Claims 6 to 10 and Claim 4,
**characterized by** a fixing element (40) interacting with the housing (12) in order to fix the supporting ring (30) and the carrying element (28).

12. Lighting device according to Claim 10 or 11,
**characterized in that** the light source (48) can be rotated or pivoted by 80° or less about the longitudinal axis (L) and by 40° or less about the transverse axis (Q), wherein the mobility of the light source about the longitudinal axis (L) can be limited by means of one or more stop elements (42).

13. Lighting device according to one of the preceding claims,
**characterized in that** the light source (48) has an LED (50) with a lens (52) for focusing the beam path (S), wherein the LED (50) is mounted on a first circuit board (54) which is arranged in the cover (24), and the first circuit board (54) can be connected to a second circuit board (56) via a cable loom (58).

14. Lighting device according to Claim 13,
**characterized in that** the cover (24) has one or more transparent areas (62), which can be illuminated by means of at least one further light source (67).

15. Use of the lighting device (10) according to one of the preceding claims in particular as a reading light in aircraft, ships, trains, automobiles or other vehicles.

## Revendications

1. Dispositif d'éclairage, en particulier lampe de lecture, comportant
- une source de lumière (48),
- un couvercle mobile (24) auquel est fixée la source de lumière (48),
- un élément de commande (21) coopérant avec le couvercle (24), et
- une unité de support (26) destinée à supporter le couvercle (24) et l'élément de commande (21),
dans lequel le couvercle (24) et la source de lumière (48) peuvent être déplacés par actionnement de l'élément de commande (21) autour de l'axe longitudinal (L) du dispositif d'éclairage (10) et par actionnement du couvercle (24) autour d'un axe transversal (Q) s'étendant perpendiculairement à l'axe longitudinal (L),
**caractérisé en ce que** l'élément de commande (21) est réalisé sous la forme d'une bague de commande (23) entourant de manière annulaire le couvercle (24) et la source de lumière (48) peut être amenée à pivoter par actionnement du couvercle (24) d'une première position à une deuxième position autour de l'axe transversal (Q), dans lequel la source de lumière (48) est recouverte par la bague de commande (23) et par l'unité de support (26) à la première position, de manière à ce que la source de lumière ne génère aucun cône de lumière émanant du dispositif d'éclairage.

2. Dispositif d'éclairage selon la revendication 1,
**caractérisé en ce que** la source de lumière (48) peut être activée et désactivée par actionnement du couvercle (24), dans lequel la source de lumière (48) se trouve à l'état désactivé à la première position et à l'état activé à la deuxième position.

3. Dispositif d'éclairage selon l'une quelconque des revendications précédentes,
**caractérisé en ce que** la source de lumière (48) présente un axe de faisceau (S) qui, à la première position, est incliné d'un angle (α), qui est de préférence compris entre 1° et 20°, vers la deuxième position par rapport à un plan (E) s'étendant perpendiculairement à l'axe longitudinal (L).

4. Dispositif d'éclairage selon l'une quelconque des revendications précédentes,
**caractérisé en ce que** l'unité de support (26) comprend une bague de support (30) et un élément de support (28) pouvant être introduit et mobile dans celle-ci, dans lequel l'élément de support (28) peut être relié au couvercle (24).

5. Dispositif d'éclairage selon l'une quelconque des revendications précédentes,
**caractérisé en ce que** l'unité de support (26) comprend un boîtier (12) sur lequel la bague de commande (23) peut être fixée de manière rotative.

6. Dispositif d'éclairage selon la revendication 5, **caractérisé en ce que** l'unité de support (26) comprend une courbe d'enclenchement (22) qui est parcourue lors de la rotation de la bague de commande (23).

7. Dispositif d'éclairage selon la revendication 4,
**caractérisé en ce que** l'élément de support (28) présente une surface de support (44) comportant un évidement ou un percement (46) et **en ce que** le cône de lumière généré par la source de lumière (48) éclaire à travers l'évidement ou le percement (46) ou la source de lumière (48) est disposée dans l'évidement ou dans le percement (46).

8. Dispositif d'éclairage selon l'une quelconque des revendications précédentes,
**caractérisé en ce que** le couvercle (24) peut être verrouillé et peut être précontraint par réglage de la deuxième à une troisième position au moyen d'un élément de verrouillage (38), et est déplacée vers la première position du fait de la force de précontrainte, et peut être déverrouillé par réglage de la première à la troisième position, et est déplacée vers la deuxième position du fait de la force de précontrainte.

9. Dispositif d'éclairage selon la revendication 8,
**caractérisé en ce que** le couvercle (24) peut être précontraint au moyen d'un élément à ressort (36).

10. Dispositif d'éclairage selon l'une des revendications 6 à 9 et la revendication 4,
**caractérisé en ce que** l'élément de support (28) comporte une crémaillère (32) et la bague de support (30) comporte un élément d'amortissement qui coopèrent pour déplacer le couvercle (24) autour de l'axe transversal (Q) et qui restreignent la mobilité du couvercle (24) autour de l'axe transversal (Q).

11. Dispositif d'éclairage selon l'une quelconque des revendications 6 à 10 et la revendication 4,
**caractérisé par** un élément de fixation (40) coopérant avec le boîtier (12), destiné à fixer la bague de support (30) et l'élément de support (28).

12. Dispositif d'éclairage selon la revendication 10 ou 11,
**caractérisé en ce que** la source de lumière (48) peut être mise en rotation ou être amenée à pivoter de 80° ou moins autour de l'axe longitudinal (L) et de 40° ou moins autour de l'axe transversal (Q), dans lequel la mobilité de la source de lumière autour de l'axe longitudinal (L) peut être limitée au moyen d'un ou plusieurs éléments de butée (42).

13. Dispositif d'éclairage selon l'une quelconque des revendications précédentes,
**caractérisé en ce que** la source de lumière (48) comprend une LED (50) comportant une lentille (52) destinée à focaliser le chemin de faisceau (S), dans lequel la LED (50) est montée sur une première carte de circuit imprimé (54) qui est disposée dans le couvercle (24) et **en ce que** la première carte de circuit imprimé (54) peut être reliée par l'intermédiaire d'un faisceau de câbles (58) à une deuxième carte de circuit imprimé (56).

14. Dispositif d'éclairage selon la revendication 13,
**caractérisé en ce que** le couvercle (24) comporte une ou plusieurs régions transparentes (62) qui peuvent être éclairées au moyen d'au moins une autre source de lumière (67).

15. Utilisation d'un dispositif d'éclairage (10) selon l'une quelconque des revendications précédentes, en particulier sous la forme de lampes de lecture dans des aéronefs, des navires, des trains, des automobiles ou d'autres véhicules.
